# EUROPEAN PATENT APPLICATION

(11) **EP 1 930 147 A2**
(43) Date of publication of application: **11.06.2008**
(21) Application number: 07023551.0
(22) Date of filing: 05.12.2007
(51) Int. Cl.: B29C 65/02, B29C 65/08, B29C 65/18, B29C 65/74, B65B 51/10, B65B 51/22, B65B 51/30

(54) **A device comprising at least two opposite jaws, as well as a method for forming a seam in a number of opposite film layers by means of such a device**

(30) Priority: 07.12.2006 NL 1033019
(71) Applicant: Robert Bosch Verpakkingsmachines B.V., 6001 SE Weert (NL)
(72) Inventor: Romijin, Barend, Sebastiaan, 6002 VX Weert (NL)
(74) Representative: Baeten, Ernest

(57) **Abstract**

A device comprises at least two opposed jaws (4), which are each provided with at least one pressure surface (8). The jaws (4) can be moved towards and away from each other. Film layers (7) can be pressed together by means of said pressure surfaces (8) during operation for forming a seam. The opposed pressure surfaces (8) include an angle (α) with each other.

## Description

The present invention relates to a device comprising at least two opposed jaws, each being provided with at least one pressure surface, which jaws can be moved towards and away from each other, wherein a number of film layers can be pressed together by means of said pressure surfaces during operation for forming a seam.

The invention further relates to a method for forming a seam in a number of film layers lying one on top of the other by means of such a device.

With such a device and method, which are known from International patent application WO-A1-03/064260, a film which has been folded over at least once is passed between the jaws in a feeding direction. Then the jaws are brought together, thereby pressing opposed film layers of the film against each other, thereby joining them together. In this way a seam is formed in the film. The device comprises two pairs of jaws, one pair positioned above the other, wherein the lower pair of jaws form an upper seam in, for example, a bag to be formed of the film, whilst at the same time the upper pair of jaws form a lower seam of a next bag. Seams of such bags formed from a film comprise at least two film layers. If a film comprises a varying number of film layers, seen in the longitudinal direction of the seam, it must be ensured upon forming the seam that the film layers are firmly joined together over the entire length of the seam.

In the device according to WO-A1-03/064260, the jaws are to that end provided with recesses in the longitudinal direction, with the seam comprising four film layers at the location of said recesses and the other parts of the seam comprising two film layers. In this way an even pressure is applied across the whole length of the seam, so that said two film layers as well as said four film layers are effectively joined together. A drawback of the known device, however, is the fact that the jaws to be used depend on the seam to be formed, making it necessary to manufacture another pair of jaws for a seam which, seen in the longitudinal direction thereof, comprises a different, varying number of film layers extending over a different length. Moreover, the film must be precisely aligned in the conveying direction with respect to the jaws, inter alia in order to ensure that the four film layers lying one on top of the other are positioned at the location of the recesses in the jaws.

The object of the invention is to provide a device by means of which an effective seam can be formed in a simple manner, which seam comprises a varying number of film layers, seen in the longitudinal direction.

This object is accomplished with the device according to the invention in that opposed pressure surfaces include an angle with each other for forming a seam between a number of film layers, which number varies in the longitudinal direction of the seam, wherein a first number of film layers are joined together by means of first parts of the pressure surfaces, whilst a second number of film layers, which number is greater than said first number of film layers, are joined together by means of second parts of the pressure surfaces, wherein the first parts of the pressure surfaces are spaced closer together than the second parts.

Since the pressure surfaces include an angle with each other, the pressure surfaces are made up of a number of parts, as it were, with first parts of the contacting surfaces being spaced closer together than second parts.

In those cases in which the seam comprises two film layers, said film layers will not be pressed together by the second parts, which are spaced relatively far apart. The pressing together of the two film layers takes place by means of the first parts of the contacting surfaces, which are spaced closer together. In those cases in which the seam comprises more film layers, for example four film layers, said film layers will often be pressed together with too much force by the first parts, frequently resulting in undesirable deformation of the film layers. Said four film layers are effectively joined together by means of the second parts, however. Since the pressure surfaces include an angle with each other, an effective joint between the film layers is obtained across the entire length of the seam.

It is noted that from DE-A1-199.04.154 a device is known which comprises two pairs of spaced-apart pressure surfaces.

The pressure surfaces of the first pair are spaced closer together than the pressure surfaces of the second pair. The opposed pressure surfaces extend parallel to each other.

The first pair of pressure surfaces is spaced from the second pair of pressure surfaces by some distance, and the two pairs of pressure surfaces form two spaced-apart seams.

The pressure surfaces do not comprise first and second parts positioned above each other, seen in the conveying direction of the film, for forming a single seam, wherein the first parts are spaced closer together than the second parts.

One embodiment of the device according to the invention is characterised in that the device comprises two pairs of opposed jaws, wherein the pressure surfaces of one pair of jaws are directed away from the pressure surfaces of the other pair of jaws.

In this way two seams are formed simultaneously, which seams are mirror-symmetric. One seam forms an upper seam of a bag to be formed, and the other seam forms a lower seam of a next bag to be formed. In this way the two seams will be identical to each other. The side of the seam where the highest pressure force is applied is located at the outer side of the bag in that case.

Another embodiment of the device according to the invention is characterised in that a cutting device is provided between said pairs of jaws.

The two seams formed by means of the pairs of jaws can be separated from each other by means of said cutting device, so that separate bags can be obtained.

Yet another embodiment of the device according to the invention is characterised in that the pressure surfaces are provided with bevels on longitudinal sides thereof.

Said bevels, too, are capable of exerting pressure forces on the opposed films. The bevels make it possible to realise a gradual transition of the pressure surfaces.

Yet another embodiment of the device according to the invention is characterised in that said angle is maximally 20 degrees.

Said angle depends inter alia on the desired height of the seam and the thickness of the film layers.

The invention also relates to a method for forming a seam, which method is characterised in that said opposed pressure surfaces include an angle with each other for forming a seam between a number of film layers, which number varies in the longitudinal direction of the seam, wherein a first number of film layers are joined together by means of first parts of the pressure surfaces, whilst a second number of film layers, which number is greater than the first number of film layers, are joined together by means of second parts of the pressure surfaces, wherein the first parts of the pressure surfaces are spaced closer together than the second parts.

The first parts of the abutting surfaces join the first number of film layers properly together. The first parts press the film layers of the second number of film layers together with relatively much force. A correct, sealed seam is formed at the location of said first parts. At the same time, however, the film layers of the second number of film layers are properly joined together by means of said second parts. As a result, a strong bond between the film layers is obtained along the entire length of the seam.

The invention will now be explained in more detail with reference to the drawings, in which:
Figure 1 is a perspective view of the device according to the invention;
Figure 2 is a perspective view of a part of the device shown in figure 1;

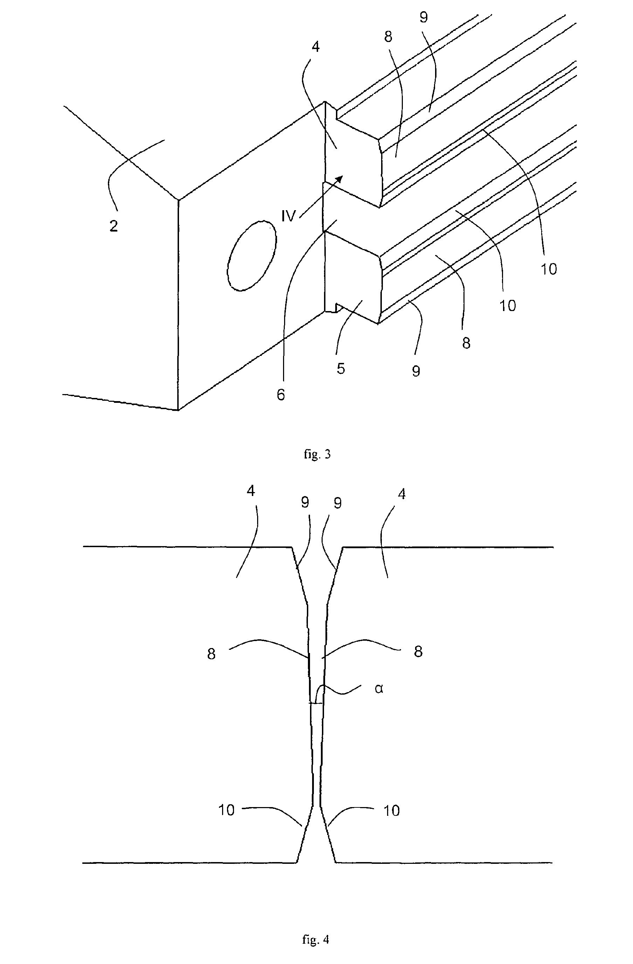

Figure 3 is a larger-scale detail of the device shown in figure 2;
Figure 4 is a side elevation of the detail of the device shown in figure 3;
Figure 5 shows the detail shown in figure 4 during the forming of a seam;
Figure 6 is a perspective view of the seam formed by means of the device according to the invention;
Figure 7 is a larger-scale detail of the seam shown in figure 6;
Figure 8 is a cross-sectional view of a number of opposed film layers at the location of a seam to be formed.

Like parts are indicated by the same numerals in the figures.

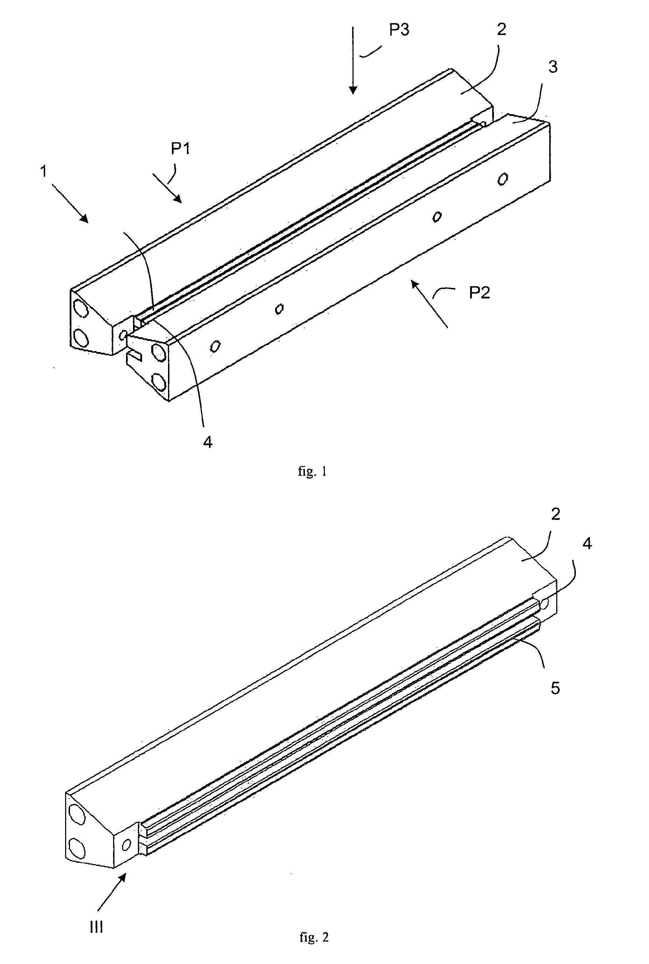

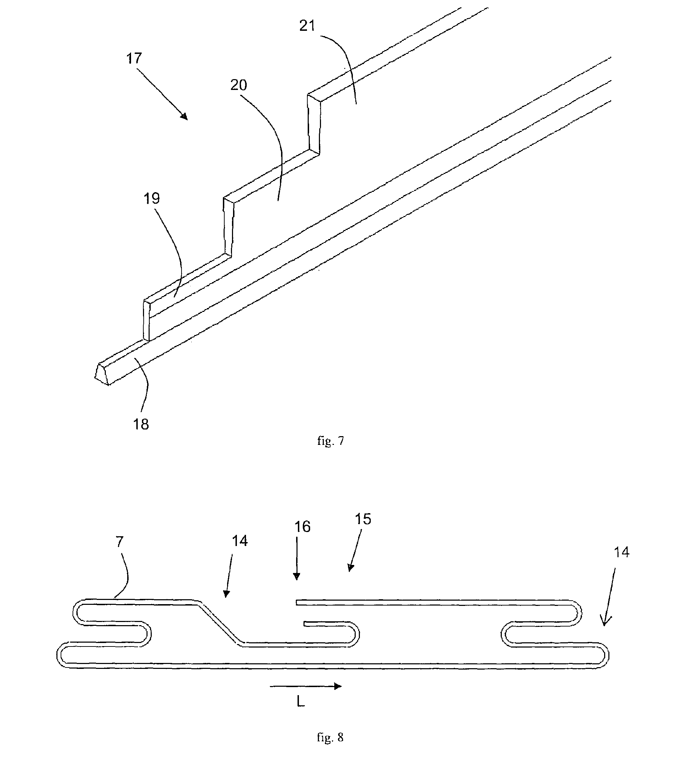

Figure 1 shows a device 1 according to the invention, which comprises two elongated holders 2, 3 positioned opposite each other, which are each provided with two jaws 4, 5. The holders 2 and 3 are made in one piece with their respective jaws 4 and 5. The jaws 4 of the holders 2, 3 are positioned opposite each other and form a first pair of jaws. The opposed jaws 5 form a second pair of jaws. A recess is located between the jaws 4, 5, in which recess a cutting device (not shown) is present. The holders 2, 3 can be moved towards each other in the directions indicated by the arrows P1, P2 and away from each other in the opposite direction of the arrows P1, P2. A film can be moved between the holders 2, 3 in a direction indicated by the arrow P3, which film is formed in such a manner that a number of film layers 7 are positioned opposite each other. An example of such a film comprising opposed film layers 7 is shown in figure 8. As figure 8 clearly shows, the number of opposed film layers varies between two and four in the longitudinal direction L.

The jaws 4 are each provided with a pressure surface 8, which pressure surfaces 8 include an acute angle α with each other. Said angle α is maximally 20 degrees, preferably less than 5 degrees. Each abutting surface 8 is provided with a bevel 9 at an upper side and a bevel 10 at a bottom side. Said bevels 9, 10 include an angle larger than the angle α with each other. The jaws 5 are identical to the jaws 4, with this understanding that the jaws 5 and the jaws 4 are arranged in mirror symmetry on either side of the recess 6. As a result, the abutting surfaces 8 of the jaws 5 face away from the abutting surfaces 8 of the jaws 4.

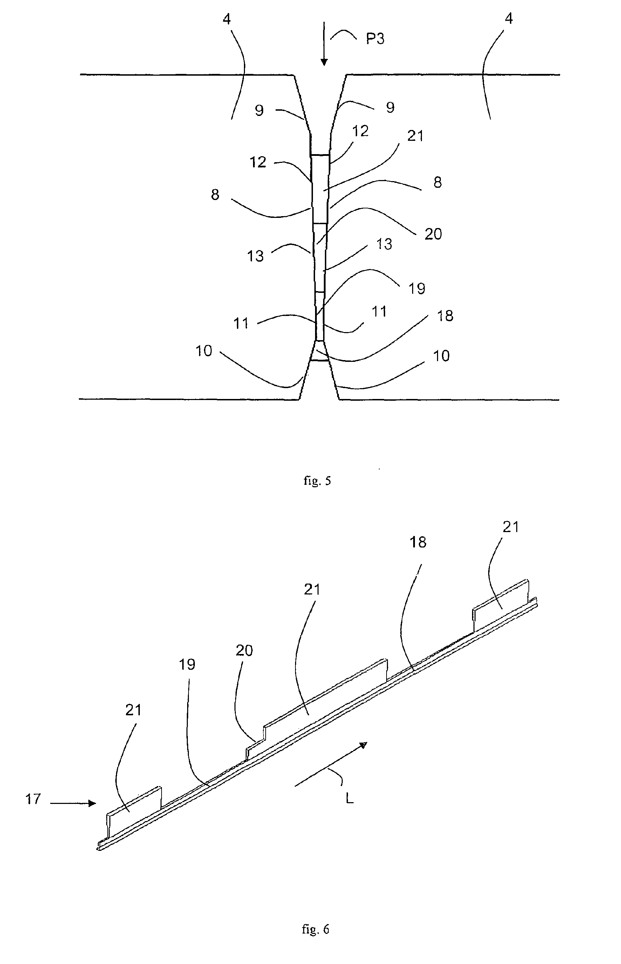

Figure 5 is a cross-sectional view, which shows the forming of a seam in opposed film layers 7. Only the seam to be formed is shown, the film present above and below the seam is not shown. In this case the film is inserted in the direction indicated by the arrow P3 between moved-apart jaws 4, after which the jaws 4 are moved towards each other in the directions indicated by the arrows P1, P2. The jaws 4, 5 are heated. The jaws 4, 5 press the film layers 7 together, forming a so-called heat seal seam. As figure 5 clearly shows, first parts 11 of the abutting surfaces 8 are spaced closer together than second parts 12. Third parts 13 positioned between the first and the second parts 11, 12 are spaced closer together than the second parts but further apart than the first parts 11. At the location of two film layers 7, the more closely spaced first parts 11 exert an appropriate force on said film layers 7, so that an effective joint between said film layers 7 is obtained. This takes place at the location indicated at 14, for example (see figure 8). At the position where four film layers are present at the location of the first parts 11, for example at the location indicated at 15 (see figure 8), the film layers 7 will be pressed together relatively firmly. At the location of the second parts 12, the four film layers 7 are pressed together with a desired pressure force and firmly joined together. Where the seam to be formed comprises three film layers 7, which is the case near position 16 in the situation shown in figure 8, said three film layers 7 are effectively joined together at the location of the third parts 13. At the location of the second parts 12, the force exerted on two or three film layers 7 is too small to realise a joint between the film layers 7.

Figure 6 is a perspective view of the seam 17 formed in a film, in which the bevels 10 have formed a joint 7 along the entire length L of the seam 17. Furthermore, a joint 19 has been formed along the entire length L of the seam 17 by the first parts 11.

At the location of the film layers 7, a joint 20 has been realised by the third parts 13. A joint 21 has been effected by the second parts 12 at the location where four film layers are present (position 15). The joints 21 formed at the location of the four film layers 7 is of a better quality as regards strength and sealing function than at the location of the joints 18, 19 and 20. The device 1 according to the invention makes it possible to realise an effective joint between a number of film layers 7 in a comparatively simple manner, wherein the number of layers may vary along the longitudinal direction L of the seam to be formed. As a result of the position at an angle relative to each other of the abutting surfaces 8, an effective joint is realised between the film layers 7 at every position 14, 15, 16.

It is also possible to arrange the two pairs of opposed jaws in such a manner that the pressure surfaces of one pair of jaws face towards the pressure surfaces of the other pair of jaws, or that the pressure surfaces of both jaws face in the same direction.

Is also possible to design the pressure surfaces with a certain curvature, for example each having a radius of 100 mm. In that case the pressure surfaces include angles varying in vertical direction with each other.

It is also possible to have the first parts 11, for example, extend parallel to each other. In this way the jaws can be easily aligned opposite each other.

It is also possible to form a number of seams positioned above each other by means of a number of jaws. The risk of leakage or insufficient strength can thus be reduced in a simple manner.

It is also possible to configure the jaws 4 differently from the jaws 5, for example because the requirements made of a lower seam of a bag are different from those made of an upper seam. The lower seam often needs to be strong, whereas an upper seam must often be easy to open. The angle between the pressure surfaces of the jaws 4 can be configured differently from the angle between the pressure surfaces of the jaws 5 in that case.

According to another possibility, a pressure surface of one jaw extends substantially vertically, whilst the pressure surface of the other jaw extends at an angle to the vertical.

Furthermore, the opposed pressure surfaces of a pair of jaws may include mutually different angles with the vertical.

It is also possible to have the bevels 10 that face towards the cutting device (not shown) extend substantially vertically. In that case the seam is only formed at the location of the heated parts 11, 12, 13. Film layers are only held against each other at the location of the bevels 10, so that the film layers will exhibit less tendency to move apart at the location of the bevels 10 upon being cut through.

It is also possible not to use bevels 9, 10.

Furthermore it is possible to use the device according to the invention for forming a seam by ultrasonic welding. The jaws comprising pressure surfaces are arranged on the sonotrode or the anvil in that case.

It is also possible to make the angle between the pressure surfaces adjustable, for example by having the jaws 4, 5 pivot relative to the holders 2, 3, as a result of which the jaws 4, 5 can be easily adjusted to handle different kinds of bags with films having a different thickness or a different desired height of the seam.

## Claims

1. A device comprising at least two opposed jaws, each being provided with at least one pressure surface, which jaws can be moved towards and away from each other, wherein a number of film layers can be pressed together by means of said pressure surfaces during operation for forming a seam, **characterised in that** opposed pressure surfaces include an angle with each other for forming a seam between a number of film layers, which number varies in the longitudinal direction of the seam, wherein a first number of film layers are joined together by means of first parts of the pressure surfaces, whilst a second number of film layers, which number is greater than said first number of film layers, are joined together by means of second parts of the pressure surfaces, wherein the first parts of the pressure surfaces are spaced closer together than the second parts.

2. A device according to claim 1, **characterised in that** the device comprises two pairs of opposed jaws, wherein the pressure surfaces of one pair of jaws are directed away from the pressure surfaces of the other pair of jaws.

3. A device according to claim 2, **characterised in that** a cutting device is provided between the two pairs of jaws.

4. A device according to any one of the preceding claims, **characterised in that** said pressure surfaces are provided with bevels on longitudinal sides thereof.

5. A device according to any one of the preceding claims, **characterised in that** said angle is maximally 20 degrees.

6. A method for forming a seam in a number of film layers by means of the device according to any one of the preceding claims, which device comprises at least two opposed jaws, each being provided with at least one pressure surface, which jaws can be moved towards and away from each other, wherein a number of film layers can be pressed together by means of said pressure surfaces during operation for forming a seam, **characterised in that** said opposed pressure surfaces include an angle with each other for forming a seam between a number of film layers, which number varies in the longitudinal direction of the seam, wherein a first number of film layers are joined together by means of first parts of the pressure surfaces, whilst a second number of film layers, which number is greater than the first number of film layers, are joined together by means of second parts of the pressure surfaces, wherein the first parts of the pressure surfaces are spaced closer together than the second parts.
